(19) Europäisches Patentamt
European Patent Office
Office européen des brevets

(11) **EP 1 583 215 B1**

(12) # EUROPÄISCHE PATENTSCHRIFT

(45) Veröffentlichungstag und Bekanntmachung des Hinweises auf die Patenterteilung:
**02.11.2016 Patentblatt 2016/44**

(51) Int Cl.:
*H02P 6/16* (2016.01)   *B62D 5/04* (2006.01)
*G01D 5/244* (2006.01)

(21) Anmeldenummer: **05006065.6**

(22) Anmeldetag: **19.03.2005**

(54) **Verfahren und Vorrichtung zur Ansteuerung eines Elektromotors**

Method and apparatus for controlling an electric motor

Méthode et dispositif pour contrôler un moteur électrique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **29.03.2004 DE 102004015212**

(43) Veröffentlichungstag der Anmeldung:
**05.10.2005 Patentblatt 2005/40**

(73) Patentinhaber: **Schaeffler Technologies AG & Co. KG**
**91074 Herzogenaurach (DE)**

(72) Erfinder: **Kro, Sven-Jostein**
**77833 Ottersweier (DE)**

(56) Entgegenhaltungen:
**EP-A2- 0 346 764     EP-A2- 0 630 097**
**DE-C1- 4 036 024     US-A- 4 914 437**

**Beschreibung**

Die vorliegende Erfindung betrifft ein Verfahren mit den Merkmalen gemäß dem Oberbegriff des Anspruchs 1. Die Erfindung betrifft darüber hinaus auch eine Vorrichtung zur Durchführung des Verfahrens.

Die europäische Patentanmeldung EP 0 630 097 A2 offenbart eine Positionsbestimmungsvorrichtung für den Rotor einer Elektromaschine mit unregelmäßigen Unebenheiten im äußeren Bereich des Rotors. Die europäische Patentanmeldung EP 0 346 764 A2 offenbart eine Vorrichtung zur Detektion der Position der magnetischen Pole eines Rotors in einem bürstenlosen Elektromotor. Die DE 40 36 024 C1 offenbart ein Verfahren zur Ermittlung der Drehzahl eines bürstenlosen Gleichstrommotors. Die US 4,914,437 offenbart ein optisches Encoding-System zur Bestimmung der absoluten und inkrementellen Position eines Rotors mittels dreier Lichtquellen sowie Öffnungen im radial äußeren Bereich des Rotors.

Bei dem Betrieb von bürstenlosen Elektromotoren ist es zur Erzeugung eines gewünschten Motormoments erforderlich, dass eine fehlerfreie elektronische Kommutierung erfolgt. Eine fehlerfreie elektronische Kommutierung setzt eine Bestromung der verschiedenen Motorwicklungen in der richtigen Richtung und zu dem richtigen Zeitpunkt voraus.

Hierfür ist es notwendig, die Position und die Drehrichtung des Rotors des Elektromotors möglichst genau zu ermitteln. Durch den Einsatz insbesondere von Hallsensoren kann die Position des Rotors bestimmt werden. Beispielsweise können Hallsensoren versetzt zueinander in Drehrichtung des Rotors angeordnet werden. Die Position des Rotors kann dann anhand eines von den Hallsensoren gelieferten Hallsensorsignalmusters eindeutig bestimmt werden. Eine Umdrehung des Rotors entspricht somit einer bestimmten Sequenz von Hallsensorsignalen.

Liegt auch nur ein fehlerhaftes Sensorsignal vor, führt dies zu einer fehlerhaften Positionsbestimmung des Rotors. Dies bedingt bei der herkömmlichen Kommutierung eine fehlerhafte Ansteuerung des Elektromotors, so dass keine Bewegung des Rotors möglich ist und ein Drehmoment von dem Elektromotor nicht erzeugt werden kann.

Zur Vermeidung von Störungen ist es daher erforderlich, bei einem Auftreten von fehlerhaften Sensorsignalen eine elektronische Kommutierung des Elektromotors zu gewährleisten, so dass ein Weiterbetrieb des Elektromotors ermöglicht wird.

Ausgehend hiervon ist es Aufgabe der vorliegenden Erfindung, ein Verfahren anzugeben, mit dem bei einem Ausfall von Sensorsignalen zur Positionsbestimmung des Rotors ein sicherer und zuverlässiger Weiterbetrieb des Elektromotors ermöglicht werden kann.

Diese Aufgabe wird durch ein Verfahren gemäß Anspruch 1 und eine Vorrichtung gemäß Anspruch 14 gelöst.

Die Erfindung schafft nun ein Verfahren zur Ansteuerung eines Elektromotors mit einem Rotor, wobei die Position und die Drehrichtung des Rotors durch elektronische Sensorsignale erfasst werden, wobei die erfassten Sensorsignale als ein Dezimaläquivalent eingelesen werden, wobei eine Umdrehung des Rotors durch eine bestimmte Sequenz von Dezimaläquivalenten erfasst wird und die Ansteuerung des Elektromotors in Abhängigkeit von der Position und der Drehrichtung des Rotors erfolgt, wobei in Abhängigkeit des Vorliegens von mindestens einem fehlerhaften Sensorsignal der Elektromotor in einem Notlaufverfahren angesteuert wird.

Erfindungsgemäß ist es vorgesehen, dass bei einem Auftreten von mindestens einem fehlerhaften Sensorsignal ein Notlaufverfahren zur Ansteuerung des Elektromotors durchgeführt wird. Dadurch kann in vorteilhafter Weise eine elektronische Kommutierung des Elektromotors gewährleistet und ein Weiterbetrieb des Elektromotors sichergestellt werden.

Als mögliche Sensorsignalfehler kommen insbesondere in Betracht:

- ein Kurzschluss nach Masse
- ein Kurzschluss nach oben (+ 5 Volt oder + 12 Volt)
- ein gebrochenes Kabel.

Bei einem Kurzschluss nach Masse ergibt ein Hallsensorsignal ausgedrückt im Binärcode als "0" ("stuck low"), ein Kurzschluss nach oben ergibt ein Hallsensorsignal ausgedrückt im Binärcode als "1" ("stuck high"). Bei einem gebrochenen Kabel erscheint das fehlerhafte Hallsensorsignal steuergerätabhängig entweder ausgedrückt im Binärcode als "0" ("stuck low") oder als "1" ("stuck high").

Erfindungsgemäß liegt mindestens ein fehlerhaftes Sensorsignal vor, wenn die erfasste Sequenz mindestens ein Dezimaläquivalent enthält, das einen vorbestimmten Wert aufweist, der von einem vorbestimmten Erwartungswert abweicht.

Die erfindungsgemäße Ansteuerung des Elektromotors in einem Notlaufverfahren bei einem Vorliegen von Sensorsignalfehlern setzt zunächst ein Erkennen derselben voraus.

Erfindungsgemäß wird bei einer Drehung des Rotors jedes erfasste Sensorsignalmuster über einen Binärcode als ein Dezimaläquivalent mit einem bestimmten Dezimalwert eingelesen, der jeweils einer bestimmten Position des Rotors zuordenbar ist. Im Normalbetrieb der fehlerfreien Kommutierung, kann auf diese Weise eine Umdrehung des Rotors durch eine bestimmte Sequenz von Dezimaläquivalenten erfasst werden, die aus einer bestimmten Folge von Dezimalwerten besteht. Diese Sequenz kann als normale oder als korrekte Sequenz bezeichnet werden.

Erfindungsgemäß werden zur Fehlererkennung bestimmte charakteristische Größen untersucht wie insbesondere die Sequenzlänge und das Auftreten von bestimmten Werten innerhalb einer erfassten Sequenz, die von den abgespeicherten Erwartungswerten aus den zuletzt korrekt erfassten Sequenzen abweichen.

Die Fehlererkennung wird erfindungsgemäß insbesondere durch einen Vergleich der Sequenz der eingelesenen Dezimalwerte mit der korrekten Sequenz von Erwartungswerten durchgeführt. Dabei wird im fehlerfreien Normalbetrieb der Kommutierung eine bestimmte Anzahl von korrekt erfassten Dezimaläquivalenten als korrekte Sequenz von bestimmten Erwartungswerten gespeichert. Die korrekte Sequenz von Erwartungswerten kann beispielsweise in einem Ringpuffer gespeichert werden.

Die Anzahl der eingelesenen Dezimaläquivalente, die gespeichert werden müssen, um eine sichere Fehlererkennung zu gewährleisten, hängt davon ab, wie sicher das Verfahren der Fehlererkennung gestaltet werden soll. Eine hinreichende Sicherheit für die Fehlererkennung ist dann gegeben, wenn eine Anzahl von zuletzt korrekt eingelesenen Dezimaläquivalenten abgespeichert wird, die etwa der doppelten Sequenzlänge entspricht. Dies ergibt sich daraus, dass die fehlerhaft erfassten Sequenzen eine kürzere Sequenzlänge als die korrekt erfassten Sequenzen aufweisen. Somit ist ein Ringpuffer mit einem Speicherplatz, der zwei korrekt erfassten Sequenzlängen umfasst, ausreichend für eine sichere Fehlererkennung. Beispielsweise kann in einem normalen fehlerfreien Betrieb, bei dem eine Sequenzlänge von sechs Dezimaläquivalenten auftritt, die letzten zwölf korrekt eingelesen Dezimalwerte abgespeichert werden. Erfindungsgemäß kann auf diese Weise mindestens ein fehlerhaftes Sensorsignal anhand der eingelesenen Dezimalwerte sicher erkannt werden.

Vorteilhafter Weise wird das Vorliegen von einem fehlerhaften Sensorsignal erkannt, wenn die erfasste Sequenz aus vier Dezimaläquivalenten besteht und ein Dezimaläquivalent einen vorbestimmten Wert aufweist, der von einem vorbestimmten Erwartungswert abweicht.

Nach einer bevorzugten Ausgestaltung des erfindungsgemäßen Verfahrens ist dieses zur Ansteuerung eines EC-Motors vorgesehen, bei dem drei in Drehrichtung des Rotors um 120° zueinander versetzte Hallsensoren H1, H2 und H3 angeordnet sind. Die sich bei einer Drehung des Rotors jeweils in einer bestimmte Position des Rotors ergebenden drei Hallsensorsignale werden als ein Dezimaläquivalent mit einem bestimmten Dezimalwert eingelesen. Wenn die Signale der Hallsensoren H3 als "4", H2 als "2" und H1 als "1" gewertet werden, wird im fehlerfreien Normalbetrieb bei einer Umdrehung des Rotors die in der nachstehenden Tabelle angegebene Sequenz von sechs Dezimaläquivalenten (grau hinterlegt) eingelesen:

| H3=4 | H2=2 | H1=1 | Wertigkeit |
|------|------|------|------------|
| 0 | 1 | 0 | 2 |
| 1 | 1 | 0 | 6 |
| 1 | 0 | 0 | 4 |
| 1 | 0 | 1 | 5 |
| 0 | 0 | 1 | 1 |
| 0 | 1 | 1 | 3 |

Diese Sequenz kann als normale oder korrekte Sequenz bezeichnet werden. Die korrekte Sequenz enthält die in der Tabelle angegebenen Erwartungswerte (grau hinterlegt), die einen fehlerfreien Betrieb charakterisieren.

Bei einer Drehung des Rotors bestimmt ein jedes eingelesenes Dezimaläquivalent eine Position des Rotors und kann daher auch als ein Zustand bezeichnet werden.

Liegt ein fehlerhaftes Hallsensorsignal vor, enthält die erfasste Sequenz nur vier Dezimaläquivalente, wobei eines von diesen einen gegenüber der korrekten Sequenz direkt erkennbaren fehlerhaften Wert "0" oder "7" aufweist. In der nachfolgenden tabellarischen Darstellung sind die Sequenzen aufgeführt, die sich in den möglichen Einzelfehlersituationen ergeben können, wenn ein Hallsensor den Fehler "stuck low" oder den Fehler "stuck high" aufweist, wobei für einen Vergleich in jedem Zustand die entsprechenden Erwartungswerte der korrekten Sequenz angegeben sind.

| Situation | Hallposition | | | | | | | | | | | |
|---|---|---|---|---|---|---|---|---|---|---|---|---|
| Korrekte Sequenz | 1 | 3 | 2 | 6 | 4 | 5 | 1 | 3 | 2 | 6 | 4 | 5 |
| H4 „stuck low" | 1 | 3 | 2 | 2 | 0 | 1 | 1 | 3 | 2 | 2 | 0 | 1 |
| H2 „stuck low" | 1 | 1 | 0 | 4 | 4 | 5 | 1 | 1 | 0 | 4 | 4 | 5 |
| H1 „stuck low" | 0 | 2 | 2 | 6 | 4 | 4 | 0 | 2 | 2 | 6 | 4 | 4 |
| H4 „stuck high" | 5 | 7 | 6 | 6 | 4 | 5 | 5 | 7 | 6 | 6 | 4 | 5 |
| H2 „stuck high" | 3 | 3 | 2 | 6 | 6 | 7 | 3 | 3 | 2 | 6 | 6 | 7 |
| H1 „stuck high" | 1 | 3 | 3 | 7 | 5 | 5 | 1 | 3 | 3 | 7 | 5 | 5 |

| | |
|---|---|
| korrekt. | |
| 0/7 | fehlerhaft – an 0/7 direkt erkennbar |
| | fehlerhaft –nicht direkt erkennbar |
| | Beispiel: Nicht erkennbare Zustandsübergänge |

Aus der Tabelle kann man erkennen, dass jede Einzelfehlersituation eine charakteristische Sequenz von Dezimaläquivalenten ergibt. Die korrekt erfassten Zustände sind mit weißem Hintergrund und die fehlerhaft erfassten Zustände sind mit grauem Hintergrund gekennzeichnet, wobei eine hellgraue Hinterlegung bedeutet, dass der fehlerhafte Zustand direkt erkennbar ist und eine dunkelgraue Hinterlegung anzeigt, dass der Fehler nicht direkt erkennbar ist.

Weiterhin ist für jede Hallposition der entsprechende Erwartungswert der korrekten Sequenz angegeben.

Der Darstellung ist ferner zu entnehmen, dass in jeder möglichen Einzelfehlersituation in einer Sequenz zwei Zustände fälschlich wiederholt auftreten. Bei diesen Zuständen handelt es sich um so genannte "doppelte Zustände", die nicht direkt erkennbar sind (beispielhaft mit einem roten Kreis in der Tabelle markiert). Ein "doppelter Zustand" liegt vor, wenn in einer Sequenz zwei aufeinander folgend eingelesene Dezimaläquivalente den gleichen Dezimalwert aufweisen. Dann können die beiden in einem doppelten Zustand enthaltenen Zustände nicht voneinander unterschieden werden und ein Zustandswechsel wird nicht erkannt. Ein doppelter Zustand wird daher als ein Zustand eingelesen, wobei der eine Teil des eingelesenen Zustands korrekt und der andere Teil fehlerhaft ist.

In einer weiteren Tabelle sind die von der Steuerung in der genannten Fehlersituation erfassten Sequenzen unter Berücksichtigung der nicht direkt erkennbaren "doppelten Zustände" dargestellt.

| Situation | Hallposition | | | | | | | | | | | |
|---|---|---|---|---|---|---|---|---|---|---|---|---|
| H4 "stuck low" | 1 | 3 | 2 | 0 | 1 | 3 | 2 | 0 | 1 | 3 | 2 | 0 |
| H2 "stuck low" | 1 | 0 | 4 | 5 | 1 | 0 | 4 | 5 | 1 | 0 | 4 | 5 |
| H1 "stuck low" | 0 | 2 | 6 | 4 | 0 | 2 | 6 | 4 | 0 | 2 | 6 | 4 |
| H4 "stuck high" | 5 | 7 | 6 | 4 | 5 | 7 | 6 | 4 | 5 | 7 | 6 | 4 |
| H2 "stuck high" | 3 | 2 | 6 | 7 | 3 | 2 | 6 | 7 | 3 | 2 | 6 | 7 |
| H1 "stuck high" | 1 | 3 | 7 | 5 | 1 | 3 | 7 | 5 | 1 | 3 | 7 | 5 |

| | |
|---|---|
| | Zustände die aus 2 Zustände bestehen. ("Doppelte" Zustände) |
| | Normale Zustände |

Die scheinbare Verkürzung der Sequenzlänge auf vier Dezimaläquivalente gegenüber der korrekten Sequenz bestehend aus sechs Dezimaläquivalenten ist darin begründet, dass die erfasste fehlerhafte Sequenz zwei so genannte "doppelte Zustände" enthält, die in der Tabelle grau hinterlegt sind und die für die Steuerung nicht direkt erkennbar sind.

Erscheint der Wert "0" in einer Sequenz, liegt die Fehlersituation "stuck low" vor. Enthält die Sequenz den Wert "7", ist die Fehlersituation "stuck high" gegeben

Enthält somit die erfasste Sequenz einmal den Wert "0" oder den Wert "7" und weist diese eine Sequenzlänge von vier auf, wobei der Wert "0" bzw. der Wert "7" periodisch alle vier erfassten Dezimaläquivalenten wiederholt auftritt, liegt ein fehlerhaftes Sensorsignal vor. Erfindungsgemäß kann dadurch in einfacher Weise ein fehlerhaftes Hallsensorsignal erkannt werden.

In einer vorteilhaften Weiterbildung des Verfahrens wird die Drehrichtung des Rotors anhand der Reihenfolge der eingelesenen Dezimaläquivalente erkannt.

Nach einer erfinderischen Weiterbildung des Verfahrens wird das Vorliegen von zwei gleichmäßig fehlerhaften Sensorsignalen erkannt, wenn die erfasste Sequenz aus zwei Dezimaläquivalenten besteht und einen vorbestimmten Wert aufweist, der von einem vorbestimmten Erwartungswert abweicht.

Zwei gleichmäßig fehlerhafte Sensorsignale liegen vor, wenn beide fehlerhafte Hallsensoren "gleichmäßig" den Fehler "stuck low" oder den Fehler "stuck high" aufweisen. Nachstehend sind für die möglichen Einzelfehlersituationen die Sequenzen tabellarisch aufgeführt, die bei einem Vorliegen von zwei gleichmäßig fehlerbehafteten Hallsensoren auftreten können.

| Situation | Hallposition | | | | | | | | | | | |
| --- | --- | --- | --- | --- | --- | --- | --- | --- | --- | --- | --- | --- |
| Korrekte Sequenz | 1 | 3 | 2 | 6 | 4 | 5 | 1 | 3 | 2 | 6 | 4 | 5 |
| H4 + H2 „stuck low" | 1 | 1 | 0 | 0 | 0 | 1 | 1 | 1 | 0 | 0 | 0 | 1 |
| H2 + H1 „stuck low" | 0 | 0 | 0 | 4 | 4 | 4 | 0 | 0 | 0 | 4 | 4 | 4 |
| H1 + H4 „stuck low" | 0 | 2 | 2 | 2 | 0 | 0 | 0 | 2 | 2 | 2 | 0 | 0 |
| H4 + H2 „stuck high" | 7 | 7 | 6 | 6 | 6 | 7 | 7 | 7 | 6 | 6 | 6 | 7 |
| H2 + H1 „stuck high" | 3 | 3 | 3 | 7 | 7 | 7 | 3 | 3 | 3 | 7 | 7 | 7 |
| H1 + H4 „stuck high" | 5 | 7 | 7 | 7 | 5 | 5 | 5 | 7 | 7 | 7 | 5 | 5 |

☐ korrekt.

0/7 fehlerhaft – an 0/7 direkt erkennbar

■ fehlerhaft – nicht direkt erkennbar

Wie der Darstellung zu entnehmen ist, tritt in jeder möglichen Einzelfehlersituation in jeder Sequenz ein korrekter Wert in Kombination mit einem fehlerhaften Wert "0" oder "7" auf, der von dem entsprechenden Erwartungswert der korrekten Sequenz abweicht. Dabei tritt der Wert "0" beziehungsweise der Wert "7" in jedem zweiten erfassten Zustand wiederholt auf.

Außerdem erscheint die erfasste Sequenz verkürzt mit einer Länge von zwei Dezimaläquivalenten gegenüber der korrekten Sequenzlänge von sechs Erwartungswerten. Die scheinbare Verkürzung der Sequenzlänge ist darin begründet, dass die fehlerhafte Sequenz vier Zustände enthält, die nicht direkt erkennbar sind.

Auf diese Weise kann erfindungsgemäß anhand der erfassten Sequenzlänge und dem Auftreten der fehlerhaften Werte "0" oder "7" in einer Sequenz das Vorliegen von zwei gleichmäßig fehlerbehafteten Hallsensoren sicher erkannt werden.

Nach einem weiteren Erfindungsgedanken wird bei einem Vorliegen von mindestens einem fehlerhaften Sensorsignal der Elektromotor mit einem für das den vorbestimmten Wert aufweisende Dezimaläquivalent gebildeten Ersatzwert angesteuert.

Erfindungsgemäß wird bei einem Vorliegen von mindestens einem fehlerhaften Sensorsignal für das in der erfassten Sequenz enthaltene fehlerhaft eingelesene Dezimaläquivalent mit dem Dezimalwert "0" oder "7" ein Ersatzwert gebildet.

Dabei kann der Ersatzwert beispielsweise an einem Vergleich der erfassten Sequenz mit der in einem Speicher hinterlegten der Erwartungswerte der korrekten Sequenz bestimmt werden.

Erfindungsgemäß ist es vorgesehen den Elektromotor in einem Notlaufverfahren mit dem für den in der erfassten Sequenz erkannten fehlerhaften Wert "0" oder "7" gebildeten Ersatzwert anzusteuern. Dies bedeutet, dass in den fehlerhaft erkannten Zuständen der Elektromotor nach dem Ersatzwert und im Übrigen nach den Dezimalwerten der korrekt eingelesenen Zustände angesteuert wird.

Auf diese Weise kann bei einem Vorliegen von fehlerhaften Sensorsignalen eine ausreichende Kommutierung des Elektromotors in einem Notlaufverfahren gewährleistet und dieser sicher weiterbetrieben werden.

In einer vorteilhaften Ausgestaltung des Verfahrens wird der Ersatzwert berechnet.

Werden in einer Sequenz die fehlerhaften Dezimalwerte "0" oder "7" eingelesen, können erfindungsgemäß für diese Zustände die Ersatzwerte aus dem Dezimalwert mindestens eines in der Sequenz enthaltenen korrekt eingelesenen Dezimaläquivalents berechnet werden.

Vorzugsweise wird die Bestimmung des Ersatzwertes durch die erfindungsgemäße Berechnung vorzugsweise durchgeführt, wenn der Ersatzwert für die fehlerhaften Zuständen nicht durch einen Vergleich mit den in einem Speicher hinterlegten Erwartungswerten der korrekten Sequenz bestimmt werden kann.

Beispielsweise kann der Ersatzwert nach der Formel

$$EW = 7 - X$$

berechnet werden, wobei EW den Ersatzwert und X den Dezimalwert eines korrekt erfassten Dezimaläquivalents aus der Sequenz bezeichnet.

In einer weiteren erfinderischen Ausgestaltung des Verfahrens ist vorgesehen, dass, wenn ein fehlerhaftes Sensorsignal vorliegt, der Ersatzwert nach der Formel

$$EW = 7 - X$$

berechnet wird, wobei EW den Ersatzwert und X den Dezimalwert eines korrekt erfassten Dezimaläquivalents aus der Sequenz bezeichnet und die Größe X dem Dezimalwert des Dezimaläquivalents entspricht, das in Zählfolge als Zweitnächstes der erfassten Sequenz nach dem den vorbestimmten Wert aufweisenden Dezimaläquivalent eingelesen wird.

Das erfindungsgemäße Verfahren wird anhand der nachfolgenden tabellarischen Darstellung beispielhaft erläutert. Für den Fall des Vorliegens eines fehlerhaften Sensorsignals sind dort die berechneten Ersatzwerte für die in den Sequenzen der möglichen Einzelfehlersituationen enthaltenen fehlerhaften Werte "0" beziehungsweise "7" angegeben.

| Situation | Hallposition | | | | | | | | | | | | EW |
|---|---|---|---|---|---|---|---|---|---|---|---|---|---|
| Korrekte Sequenz | 1 | 3 | 2 | 6 | 4 | 5 | 1 | 3 | 2 | 6 | 4 | 5 | |
| H4 „stuck low" | 1 | 3 | 2 | 2 | 0 | 1 | 1 | 3 | 2 | 2 | 0 | 1 | 4 |
| H2 „stuck low" | 1 | 1 | 0 | 4 | 4 | 5 | 1 | 1 | 0 | 4 | 4 | 5 | 2 |
| H1 „stuck low" | 0 | 2 | 2 | 6 | 4 | 4 | 0 | 2 | 2 | 6 | 4 | 4 | 1 |
| H4 „stuck high" | 5 | 7 | 6 | 6 | 4 | 5 | 5 | 7 | 6 | 6 | 4 | 5 | 3 |
| H2 „stuck high" | 3 | 3 | 2 | 6 | 6 | 7 | 3 | 3 | 2 | 6 | 6 | 7 | 5 |
| H1 „stuck high" | 1 | 3 | 3 | 7 | 5 | 5 | 1 | 3 | 3 | 7 | 5 | 5 | 6 |

Bildet man beispielsweise, wenn der Hallsensor H2 den Fehler "stuck low" aufweist, für den fehlerhaften Wert "0" einen Ersatzwert nach der oben genannten Formel E = 7 - X ergibt sich in diesem Fall für X der Wert "5", der dem Dezimalwert des korrekt als Zweitnächstes eingelesenen Dezimaläquivalent entspricht. Hierbei ist zu berücksichtigen, dass der dem direkt erkennbaren Wert "0" nachfolgende "doppelte Zustand" nicht direkt erkennbar ist und als ein Zustand eingelesen wird. Für den Ersatzwert berechnet man dann

$$EW = 7 - 5 = 2.$$

Der berechnete Ersatzwert "2" ist gleich dem entsprechenden Erwartungswert der korrekten Sequenz für den fehlerhaften Wert "0" in der erfassten Sequenz.

Auf diese Weise werden erfindungsgemäß auch in den anderen Einzelfehlersituationen für die in der eingelesenen Sequenz enthaltenen fehlerhaften Werte "0" beziehungsweise "7" Ersatzwerte berechnet, die den entsprechenden Erwartungswerten der korrekten Sequenz im fehlerfreien Betrieb entsprechen.

Dadurch wird erreicht, dass der Elektromotor in den fehlerhaften Zuständen "0" und "7" in einem Notlaufverfahren korrekt angesteuert werden kann.

Nach einer weiteren vorteilhaften Ausgestaltung des Verfahrens ist vorgesehen, dass, wenn zwei gleichmäßig fehlerhafte Sensorsignale vorliegen, der Ersatzwert nach der Formel

$$EW = 7 - X$$

berechnet wird, wobei EW den Ersatzwert und X den Dezimalwert eines korrekt erfassten Dezimaläquivalents aus der Sequenz bezeichnet und die Größe X dem Dezimalwert des Dezimaläquivalents entspricht, das in der Gegenphase zu dem den vorbestimmten Wert aufweisenden Wert eingelesen wird.

Das erfindungsgemäße Prinzip wird anhand der nachfolgenden tabellarischen Darstellung beispielhaft erläutert. Für den Fall des Vorliegens von zwei fehlerhaften Sensorsignalen sind dort die berechneten Ersatzwerte für die in den Sequenzen der möglichen Einzelfehlersituationen enthaltenen fehlerhaften Werte "0" beziehungsweise "7" angegeben.

| Situation | Hallposition | | | | | | | | | | | | EW |
|---|---|---|---|---|---|---|---|---|---|---|---|---|---|
| Korrekte Sequenz | 1 | 3 | 2 | 6 | 4 | 5 | 1 | 3 | 2 | 6 | 4 | 5 | |
| H4 + H2 „stuck low" | 1 | 1 | 0 | 0 | 0 | 1 | 1 | 1 | 0 | 0 | 0 | 1 | 6 |
| H2 + H1 „stuck low" | 0 | 0 | 0 | 4 | 4 | 4 | 0 | 0 | 0 | 4 | 4 | 4 | 3 |
| H1 + H4 „stuck low" | 0 | 2 | 2 | 2 | 0 | 0 | 0 | 2 | 2 | 2 | 0 | 0 | 5 |
| H4 + H2 „stuck high" | 7 | 7 | 6 | 6 | 6 | 7 | 7 | 7 | 6 | 6 | 6 | 7 | 1 |
| H2 + H1 „stuck high" | 3 | 3 | 3 | 7 | 7 | 7 | 3 | 3 | 3 | 7 | 7 | 7 | 4 |
| H1 + H4 „stuck high" | 5 | 7 | 7 | 7 | 5 | 5 | 5 | 7 | 7 | 7 | 5 | 5 | 2 |

Bildet man, wenn beispielsweise die Hallsensorsignale H2 und H1 den Fehler "stuck low" aufweise, für den fehlerhaften Wert "0" ein Ersatzwert nach der Formel E = 7 - X ergibt sich in diesem Fall für die Größe X der Wert "4", der dem Dezimalwert des Dezimaläquivalents entspricht, das in Gegenphase zum fehlerhaften Wert 0 eingelesen wird. Für den Ersatzwert berechnet man dann

$$EW = 7 - 4 = 3.$$

Auf diese Weise werden erfindungsgemäß auch in den anderen Einzelfehlersituationen für die in der eingelesenen Sequenz enthaltenen fehlerhaften Werte "0" beziehungsweise "7" Ersatzwerte berechnet, die den Erwartungswerten der korrekten Sequenz im fehlerfreien Betrieb entsprechen.

Dadurch wird erreicht, dass der Elektromotor in den fehlerhaften Zuständen "0" und "7" in einem Notlaufverfahren korrekt angesteuert werden kann.

Schließlich ist es nach einer vorteilhaften Weiterbildung der Erfindung auch möglich, das Vorliegen von zwei ungleichmäßig fehlerhafte Sensorsignale zu erkennen, wenn die erfasste Sequenz aus zwei Dezimaläquivalenten besteht und eine Plausibilitätsprüfung einen Fehler ergibt.

Liegen zwei ungleichmäßig fehlerhaften Sensorsignale vor, ist einer der Hallsensoren mit dem Fehler "stuck low" und ein anderer Hallsensor mit dem Fehler "stuck high" behaftet. In diesem Fall besteht die erfasste Sequenz aus zwei korrekt eingelesenen Dezimaläquivalenten, die nicht von den entsprechenden Erwartungswerten abweichen und die wiederholt abwechselnd auftreten.

Bei dieser Fehlersituation gibt es keinen eindeutig erkennbaren Fehlerzustand. Es wird nur ein Wechsel zwischen zwei korrekt erfassten Zuständen erkannt. Zur Erkennung des Fehlers ist eine zusätzliche Plausibilitätsprüfung erforderlich, die bestimmte Vorgabewerte mit zurückgelesenen Werten vergleicht und bei Abweichungen einen Fehler feststellt. Beispielsweise kann eine Plausibilisierung in der Weise erfolgen, dass der Elelektromotor mit bestimmten Vorgabewerten angesteuert wird, für die die Stellbewegung eines durch den Elektromotor antreibbaren Stellglieds bekannt ist und überprüft wird, ob die vorbestimmte Stellposition erreicht wird.

In der nachstehenden Tabelle sind alle möglichen Einzelfehlersituationen für den Fall des Vorliegens von zwei ungleichmäßig fehlerhaften Sensorsignalen veranschaulicht.

| Situation | Hallposition | | | | | | | | | | | |
|---|---|---|---|---|---|---|---|---|---|---|---|---|
| Korrekte Sequenz | 1 | 3 | 2 | 6 | 4 | 5 | 1 | 3 | 2 | 6 | 4 | 5 |
| H4 „stuck high" H2 „stuck low" | 5 | 5 | 4 | 4 | 4 | 5 | 5 | 5 | 4 | 4 | 4 | 5 |
| H2 „stuck high" H1 „stuck low" | 2 | 2 | 2 | 6 | 6 | 6 | 2 | 2 | 2 | 6 | 6 | 6 |
| H1 „stuck high" H4 „stuck low" | 1 | 3 | 3 | 3 | 1 | 1 | 1 | 3 | 3 | 3 | 1 | 1 |
| H4 „stuck low" H2 „stuck high" | 3 | 3 | 2 | 2 | 2 | 3 | 3 | 3 | 2 | 2 | 2 | 3 |
| H2 „stuck low" H1 „stuck high" | 1 | 1 | 1 | 5 | 5 | 5 | 1 | 1 | 1 | 5 | 5 | 5 |
| H1 „stuck low" H4 „stuck high" | 4 | 6 | 6 | 6 | 4 | 4 | 4 | 6 | 6 | 6 | 4 | 4 |

Wie der Darstellung zu entnehmen ist, besteht die Sequenz aus zwei korrekt erfassten Zuständen, die ständig wiederholt werden. Der eine Zustand ist "1", "2" oder "4" (binär 1-Bit-Zustand). Der zweite erfasste Zustand weist den Wert "3", "5" oder "6" (binär 2-Bit-Zustand) auf.

Anhand der beiden erfassten Zustände kann bestimmt werden, welche Sensorsignale fehlerhaft sind:

Im 1-Bit-Zustand "1", "2", oder "4", wird anhand des erfassten Zustands erkannt, welches Sensorsignal den Fehler "stuck high" aufweist:

erfasster Zustand "1": H1 "stuck high";
erfasster Zustand "2": H2 "stuck high";
erfasster Zustand "4": H3 "stuck high".

Im 2-Bit-Zustand mit den Werten "3", "5" oder "6" kann das fehlerhafte Halisensorsignal durch die Formel

$$H = 7 - D,$$

identifiziert werden, wobei H das gestörte Hallsensorsignal (H1, H2 oder H3) und D den Dezimalwert des erfassten Zustands bezeichnet. Danach ergibt sich:

erfasster Zustand "3": H4 "stuck low";
erfasster Zustand "5": H2 "stuck low";
erfasster Zustand "6": H1 "stuck low".

In einer erfinderischen Weiterbildung des Verfahrens ist vorgesehen, dass, wenn mindestens ein fehlerhaftes Sensorsignal vorliegt, die Ansteuerung des Elektromotors in zumindest einem erfassten Zustand mit veränderbaren Ersatzwerten in Zeitintervallen mit vorbestimmter Zeitdauer erfolgt.

Weist ein Hallsensor den Fehler "stuck low" oder "stuck high" auf, wird bei einer Drehung des Rotors in der Position, in der im fehlerfreien Betrieb der Sensor einen Impuls liefern würde, kein Sensorsignal gesendet. Dies führt bei der Erfassung der Sensorsignale zu einem Auftreten von so genannten "doppelten Zuständen" in einer Sequenz. Dadurch wird der Elektromotor in zwei von sechs Zuständen einer Sequenz fehlerhaft angesteuert. Sind zwei Hallsensorsignale gestört, ist die Kommutierung des Elektromotors in vier von sechs Zuständen fehlerhaft.

Für das erfindungsgemäße Verfahren wird der Umstand genutzt, dass die fehlerhaften und korrekten Teile eines "doppelten Zustands" bekannt sind. Die fehlerhaften Teile eines "doppelten Zustands" treten regelmäßig vor und nach den Zuständen "0" bzw. "7" auf. Ferner weist die fehlerhaft erfasste Sequenz wie oben bereits dargestellt eine verkürzte Sequenzlänge von nur vier gegenüber der korrekten Sequenzlänge von sechs Zuständen auf. Beispielsweise ist es daher erfindungsgemäß vorgesehen, aus einem Vergleich der erfassten Sequenz mit den in einem Speicher hinterlegten, entsprechenden Erwartungswerten der korrekten Sequenz die fehlerhaften Teile der "doppelten Zustände" zu ermitteln.

Lediglich der Zeitpunkt des Übergangs zwischen dem korrekten und dem fehlerhaften Zustand ist nicht bekannt.

Erfindungsgemäß ist daher weiter vorgesehen, in den "doppelten Zuständen" die Perioden mit einer fehlerhaften Ansteuerung mittels einer Zeitmessung oder eines Zählers zu verkürzen. Dies wird dadurch erreicht, dass die Ansteuerung des Elektromotors in diesen Zuständen nach einer bestimmten Zeitdauer erfolgt.

Weiterhin können erfindungsgemäß in dieser Fehlersituation die Ersatzwerte für den jeweils gestörten Teil der "doppelten Zustände" bestimmt werden.

Beispielsweise kann bei einem Auftreten eines "doppelten Zustands" der Elektromotor nach der gemessenen Zeitdauer des zuletzt erfassten korrekten Zustandswechsels mit einem Ersatzwert angesteuert werden.

Auf diese Weise kann eine deutlich verbesserte Kommutierung des Elektromotors in dieser Fehlersituation erreicht werden. Bei vorausgesetzter konstanter Rotordrehzahl ist eine vollkommen korrekte Ansteuerung möglich.

In einer vorteilhafter Ausgestaltung des Verfahrens erfolgt, wenn ein fehlerhaftes Sensorsignal vorliegt und zwei Zustände mit dem gleichen Dezimalwert erfasst werden, die Ansteuerung des Elektromotors mit veränderbaren Ersatzwerten in zwei Zeitintervallen, wobei die besagte Zeitdauer jeweils der Zeitdauer des zuletzt korrekt erfassten Zustands entspricht

In der nachstehenden tabellarischen Darstellung sind für den Fall des Vorliegens eines fehlerhaften Sensorsignals in allen möglichen Einzelfehlersituationen die für die gestörten Zustände, d.h. die "doppelten Zustände" und die Zustände "0" bzw. "7", erfindungsgemäß berechneten Ersatzwerte EW angegeben.

| Situation | Hallposition | | | | | | | | | | | | Gestörter Zustand | Ersatzwert |
|---|---|---|---|---|---|---|---|---|---|---|---|---|---|---|
| Normal | 1 | 3 | 2 | 6 | 4 | 5 | 1 | 3 | 2 | 6 | 4 | 5 | | |
| H4 „stuck low" | 1 | 3 | 2 | 2 | 0 | 1 | 1 | 3 | 2 | 2 | 0 | 1 | „2"  „0"  „1" | 6  4  5 |
| H2 „stuck low" | 1 | 1 | 0 | 4 | 4 | 5 | 1 | 1 | 0 | 4 | 4 | 5 | „1"  „0"  „4" | 3  2  6 |
| H1 „stuck low" | 0 | 2 | 2 | 6 | 4 | 4 | 0 | 2 | 2 | 6 | 4 | 4 | „4"  „0"  „2" | 5  1  3 |
| H4 „stuck high" | 5 | 7 | 6 | 6 | 4 | 5 | 5 | 7 | 6 | 6 | 4 | 5 | „5"  „7"  „6" | 1  3  2 |
| H2 „stuck high" | 3 | 3 | 2 | 6 | 6 | 7 | 3 | 3 | 2 | 6 | 6 | 7 | „6"  „7"  „3" | 4  5  1 |
| H1 „stuck high" | 1 | 3 | 3 | 7 | 5 | 5 | 1 | 3 | 3 | 7 | 5 | 5 | „3"  „7"  „5" | 2  6  4 |

In dieser Fehlersituation werden nur vier Zustände in jeder Sequenz erfasst. Das erfindungsgemäße Verfahren wird nachfolgend beispielhaft anhand einer Darstellung gezeigt für den Fall, dass der Hallsensor H4 den Fehler "stuck low" und der Hallsensor den Fehler "stuck high" aufweist, erläutert.

Die "doppelten Zustände" "2" und "1" beziehungsweise "3" und "5" (dunkelgrau hinterlegt) können nicht direkt erkannt werden. Erfindungsgemäß wird die Zeitdauer eines jeden erfassten Zustands, d.h. die Zeitperiode zwischen zwei Zustandswechseln, gemessen. Beim Auftreten eines "doppelten Zustands" wird nach der Zeitdauer des zuletzt erfassten Zustands der Elektromotor mit dem berechneten Ersatzwert angesteuert. Beispielsweise wird die Zeitperiode zwischen dem Zustandswechsel vom Zustand "1" zum Zustand "3" und dem Zustandswechsel vom Zustand "3" zum Zustand "2" gemessen. Nach dem Zustandswechsel vom Zustand "3" zum Zustand "2" wird dann ein Zähler gestartet. Nach der gemessenen Zeitdauer für den zuletzt erfassten Zustand "3" erfolgt die Ansteuerung des Elektromotors mit dem erfindungsgemäß für den gestörten Zustand "2" berechneten Ersatzwert nach Formel

$$EW = 7 - X = 7 - 1 = 6,$$

wobei X den Dezimalwert des Dezimaläquivalents entspricht, das in Zählfolge der Sequenz nach dem Dezimaläquivalent mit dem Dezimalwert "0" oder "7" als Zweitnächstes erfasst wird.

Erfindungsgemäß ist vorgesehen die Zeitdauer eines jeden erfassten Zustands kontinuierlich zu messen. Auf diese Weise können aktuelle Drehzahländerungen des Rotors berücksichtigt werden.

In erfindungsgemäßer Weise kann auch der Ersatzwert aus einem Vergleich der erfassten Zustände mit den in einem Speicher hinterlegten, entsprechenden Erwartungswerten der korrekten Sequenz bestimmt werden.

In vorteilhafter Weise erfolgt erfindungsgemäß, wenn zwei fehlerhafte Sensorsignale vorliegen, die Ansteuerung des Elektromotors in jedem erfassten Zustand mit veränderbaren Ersatzwerten in drei Zeitintervallen, wobei die Zeitdauer jeweils einem Drittel der Zeitdauer des zuletzt erfassten Zustands entspricht.

In dieser Fehlersituation liegen entweder zwei gleichmäßig fehlerhafte Sensorsignale oder zwei ungleichmäßig fehlerhafte Sensorsignale vor.

Das erfindungsgemäße Verfahren wird zunächst für den Fall des Vorliegens von zwei gleichmäßig fehlerhaften Sensorsignalen anhand eines Beispiels erläutert.

Die Fehlersituation H4 und H2 "stuck low" und H2 und H1 "stuck high" sind hierzu beispielhaft in der folgenden Darstellung veranschaulicht.

| Situation | Hallposition | | | | | | | | | | | | |
|---|---|---|---|---|---|---|---|---|---|---|---|---|---|
| Korrekte Sequenz | 1 | 3 | 2 | 6 | 4 | 5 | 1 | 3 | 2 | 6 | 4 | 5 | |
| H4 + H2 „stuck low" | 1 | 1 | 0 | 0 | 0 | 1 | 1 | 1 | 0 | 0 | 0 | 1 | |
| H2 + H1 „stuck high" | 3 | 3 | 3 | 7 | 7 | 7 | 3 | 3 | 3 | 7 | 7 | 7 | |

Die Sequenz enthält nur zwei erkennbare Zustände. Davon weist immer ein erfasster Zustand den Wert "0" oder "7" auf. Ein Vergleich mit den in der Darstellung angegebenen Erwartungswerten der korrekten Sequenz zeigt, dass die beiden erfassten Zustände jeweils zu einem Drittel korrekt und zu zwei Dritteln fehlerhaft sind.

Dabei ist erfindungsgemäß vorgesehen, die als fehlerhaft erkannten Teile eines erfassten Zustands mittels einer Vorgaberichtung und einem Vergleich der erfassten Zustände der fehlerhaften Sequenz mit den in einem Speicher abgelegten, entsprechenden Erwartungswerten der korrekten Sequenz richtig zu identifizieren. Die Vorgabe der Drehrichtung des Rotors ist erforderlich, da in dieser Fehlersituation die Drehrichtung des Rotors nicht erkannt werden kann.

Erfindungsgemäß ist weiter vorgesehen, die Zeitdauer eines zuletzt erfassten Zustands der fehlerhaften Sequenz, der drei Zuständen der korrekten Sequenz entspricht, zu messen. Mit Hilfe der erfassten Zeitdauer wird dann in den folgenden drei Zuständen die Ansteuerung des Elektromotors korrigiert. Dabei wird in jedem erfassten Zustand jeweils nach einem Drittel der Zeitdauer des zuvor erfassten Zustands der Elektromotor mit dem den jeweiligen Zustand entsprechenden Erwartungswert der korrekten Sequenz angesteuert. Der dem jeweiligen Zustand entsprechende Erwartungswert kann dabei durch einen Vergleich der erfassten Zustände mit den in einem Speicher abgelegten Erwartungswerten der korrekten Sequenz bestimmt werden.

Das erfindungsgemäße Verfahren wird im Folgenden anhand der in der obigen Darstellung enthaltenen Fehlersituation H2 und H1 "stuck high" beispielhaft erläutert. Es wird die Zeitperiode zwischen dem Zustandswechsel vom Zustand "7" zum Zustand "3" und dem Zustandswechsel vom Zustand "3" zum Zustand "7" gemessen. Die gemessene Zeitdauer entspricht der Zeitdauer eines erfassten fehlerhaften Zustands, der drei nicht erkannte Zustände enthält. Nach dem zuletzt erfassten Zustandswechsel von "3" nach "7" wird dann ein Zähler gestartet und in einem ersten Drittel der oben gemessenen Zeitdauer der Elektromotor mit dem entsprechenden Erwartungswert "6" der korrekten Sequenz angesteuert und in einem zweiten Drittel mit dem entsprechenden Erwartungswert "4" der korrekten Sequenz angesteuert sowie im letzten Drittel mit dem entsprechenden Erwartungswert "5" der korrekten Sequenz angesteuert. Nach dem folgenden erfassten Zustandswechsel von "7" nach "3" wird das Verfahren in ähnlicher Weise mit den entsprechenden Ersatzwerten, mit ggf. veränderter gemessener Zeitdauer für den zuletzt erfassten Zustand, fortgeführt. Dabei ist erfindungsgemäß weiterhin vorgesehen, die Zeitdauer eines jedes erfassten Zustands kontinuierlich zu messen, so dass aktuelle Drehzahlschwankungen des Rotors berücksichtigt werden können.

In der folgenden Darstellung ist schematisch das erfindungsgemäße Notlaufverfahren in zeitlicher Abfolge beispielhaft für die Fehlersituation H4 und H2 "stuck high" veranschaulicht, wobei die waagerechte Länge der durch Rechteckflächen angedeuteten erfassten Zustände deren Zeitdauer bedeutet.

| Korrekte Sequenz | | | 2 | 6 | 4 | 5 | 1 | 3 | 2 |
|---|---|---|---|---|---|---|---|---|---|
| Erfasste Sequenz | | | 6 | | | 7 | | | 6 |
| Mit EW | | | 6 | | | 1 | | | 6 |
| Mit Drehrichtung und bekannter Reihenfolge | 2 | | 6 | | 4 | 5 | 1 | 3 | 2 |
| Mit Zeitmessung | | | 2 | 6 | 4 | 5 | 1 | 3 | 2 |

In der ersten Zeile der Darstellung ist die korrekte Sequenz dargestellt. Die zweite Zeile gibt die in der gegebenen Fehlersituation erfasste Sequenz wieder. In Zeile drei ist ein erfindungsgemäßes Notlaufverfahren angegeben, bei dem der Elektromotor in den direkt erkennbaren fehlerhaften Zuständen "0" bzw. "7" mit einem Ersatzwert angesteuert wird. Weiterhin ist in Zeile vier ein Notlaufverfahren dargestellt, bei dem der Elektromotor in jedem erfassten Zustand mit den entsprechenden Erwartungswerten der korrekten Sequenz ohne eine Zeitmessung angesteuert wird. Die letzte Zeile zeigt das erfindungsgemäße Notlaufverfahren mit einer Zeitmessung in jedem erfassten Zustand und einer Ansteuerung des Elektromotors mit den entsprechend Erwartungswerten der korrekten Sequenz in Zeitintervallen mit einer Zeitdauer, die jeweils einem Drittel der Zeitdauer eines zuletzt erfassten Zustand entspricht, wobei eine konstante Drehzahl des Rotors in dieser Darstellung vorausgesetzt wird.

Aus der Darstellung ist aus einem Vergleich mit der in der ersten Zeile dargestellten korrekten Sequenz zu erkennen, dass das erfindungsgemäße Notlaufverfahren unter der Voraussetzung einer konstanten Rotordrehzahl bei zwei gleichmäßig fehlerhaften Sensorsignalen eine korrekte Kommutierung des Elektromotors gewährleistet.

Bei einem Vorliegen von zwei ungleichmäßig fehlerhaften Sensorsignalen enthält die erfasste Sequenz nur zwei korrekte Zustände, die abwechseln wiederholt auftreten.

Daher kann es erfindungsgemäß zweckmäßig sein den Elektromotor nach einem Drittel der Zeitdauer eines erfassten Zustands in der oben beschriebenen Weise mit einem Ersatzwert entsprechenden Erwartungswert der korrekten Sequenz anzusteuern, wobei die Zeitdauer eines jeden erfassten Zustands kontinuierlich gemessen wird, um aktuelle Drehzahländerungen des Rotors berücksichtigen zu können.

Dadurch kann auch bei einem Auftreten von zwei ungleichmäßig fehlerhaften Sensorsignalen eine verbesserte Ansteuerung des Elektromotors in einem Notlaufverfahren erreicht und der Elektromotor sicher weiterbetrieben werden.

Erfindungsgemäß ist in einer erfinderischen Weiterentwicklung des Verfahrens vorgesehen, dass, wenn zwei ungleichmäßig fehlerhafte Sensorsignale vorliegen, der Ersatzwert für einen gestörten 2-Bit-Zustand der Wertigkeit des nicht gestörten Sensors-signals entspricht und für einen gestörten 1-Bit-Zustand der Ersatzwert, der Summe der Wertigkeiten der beiden gestörten Sensorsignale entspricht.

In der nachfolgenden tabellarischen Darstellung sind für den Fall des Vorliegens von zwei ungleichmäßig fehlerhaften Sensorsignalen für alle möglichen Einzelfehlersituationen die für die gestörten Zustände erfindungsgemäß bestimmten Ersatzwerte angegeben.

| Situation | Hallposition | | | | | | | | | | | | Gestörter Zustand | EW |
|---|---|---|---|---|---|---|---|---|---|---|---|---|---|---|
| Normal | 1 | 3 | 2 | 6 | 4 | 5 | 1 | 3 | 2 | 6 | 4 | 5 | | |
| H4 „stuck high" H2 „stuck low" | 5 | 5 | 4 | 4 | 4 | 5 | 5 | 5 | 4 | 4 | 4 | 5 | „4" „5" | 6 1 |
| H2 „stuck high" H1 „stuck low" | 2 | 2 | 2 | 6 | 6 | 6 | 2 | 2 | 2 | 6 | 6 | 6 | „2" „6" | 3 4 |
| H1 „stuck high" H4' „stuck low" | 1 | 3 | 3 | 3 | 1 | 1 | 1 | 3 | 3 | 3 | 1 | 1 | „1" „3" | 5 2 |
| H4 „stuck low" H2 „stuck high" | 3 | 3 | 2 | 2 | 2 | 3 | 3 | 3 | 2 | 2 | 2 | 3 | „2" „3" | 6 1 |
| H2 „stuck low" H1 „stuck high" | 1 | 1 | 1 | 5 | 5 | 5 | 1 | 1 | 1 | 5 | 5 | 5 | „1" „5" | 3 4 |
| H1 „stuck low" H4 „stuck high" | 4 | 6 | 6 | 6 | 4 | 4 | 4 | 6 | 6 | 6 | 4 | 4 | „4" „6" | 5 2 |

Im Folgenden wird das erfindungsgemäße Verfahren beispielhaft anhand der Fehlersituation H4 "stuck high" und H2 "stuck low" erläutert.

Aus der Darstellung ist erkennbar, dass in der gegebenen Fehlersituation in einer Sequenz nur zwei korrekte Zustände "4" und "5" erfasst werden, die sich abwechselnd wiederholen.

Der Zustand "5" entspricht einem 2-Bit-Zustand und der Zustand "4" entspricht einem 1-Bit-Zustand.

In dieser Fehlersituation kann erfindungsgemäß ein Notlaufverfahren durchgeführt werden, in dem für beide Zustände Ersatzwerte eingesetzt werden, wobei im 2-Bit-Zustand "5" der Ersatzwert durch die Wertigkeit des nicht gestörten Sensorsignals

$$EW = H1 = 1$$

bestimmt wird.

Für den 1-Bit-Zustand "4" wird der Ersatzwert aus der Summe der Wertigkeiten der beiden Signale H3 = 4 und H2 = 2 berechnet, so dass sich der Ersatzwert

$$EW = 4 + 2 = 6$$

ergibt.

In einer erfinderischen Weiterentwicklung des Verfahrens wird in einer Inkrementalwegmessung zur Bestimmung der Position eines durch den Elektromotor antreibbaren Stellglieds, wobei jeder Wechsel eines Dezimaläquivalents als ein Inkrement gezählt wird, bei einem Vorliegen von mindestens einem fehlerhaften Sensorsignals bei jedem Wechsel eines Dezimaläquivalents die Zählung der Inkremente in der Inkrementalwegmessung korrigiert.

Sind ein oder zwei Sensorsignale gestört, treten in der Sequenz neben den direkt erkennbaren fehlerhaften Werten "0" und "7" auch nicht direkt erkennbare fehlerhafte "doppelte Zustände" auf. Wie bereits oben ausgeführt, können diese Zustände nicht voneinander unterschieden werden und ein Zustandswechsel wird nicht erkannt, so dass diese als ein Zustand eingelesen werden. Bei einer herkömmlichen Inkrementalwegmessung, bei der das Einlesen eines jeden Dezimaläquivalents als ein Inkrement gezählt wird, würde daher bei jedem Auftreten eines "doppelten Zustands" bei dem wie bereits oben dargelegt, ein Zustandswechsel nicht erkannt wird, jeweils ein Inkrement nicht gezählt werden, d.h. die Inkrementalwegmessung wäre bei jedem Auftreten eines "doppelten Zustands" mit dem Fehler eines nicht gezählten Inkrements behaftet.

Liegt ein fehlerhaftes Sensorsignal vor, treten die "doppelten Zustände" in einer Sequenz jeweils vor und nach dem Einlesen eines fehlerhaften Wertes "0" oder "7" auf. Bei einem Vorliegen von zwei fehlerhaften Sensorsignalen werden wie bereits oben ausgeführt nur zwei Zustände von sechs Zuständen in einer jeden Sequenz erkannt. In diesen Fehlersituationen ist es daher erforderlich die Zählung der Inkremente in der Inkrementalwegmessung, beispielsweise durch eine Zählung zusätzlicher nicht erkannter Inkremente, zu korrigieren.

Vorteilhafter Weise werden daher erfindungsgemäß, wenn ein fehlerhaftes Sensorsignal vorliegt, bei jedem Wechsel zu und von dem vorbestimmten Wert zwei Inkremente gezählt.

Liegt ein fehlerhaftes Sensorsignal vor, werden von den sechs Dezimaläquivalenten in einer korrekten Sequenz nur vier erfasst. Dies ist darin begründet, dass in jeder Sequenz zwei "doppelte Zustände" enthalten sind die nicht direkt erkennbar sind, wobei diese jeweils vor und nach dem Einlesen der besagten fehlerhaften Werte "0" oder "7" auftreten und Letztere eindeutig erkennbar sind.

Erfindungsgemäß ist daher vorgesehen die Inkrementalwegmessung in einem Notlaufverfahren durch Zählung von zwei Inkrementen bei jedem Zustandswechsel zu und von den Zuständen "0" oder "7" zu korrigieren, wobei in den übrigen erfassten Zuständen eine Zählung von einem Inkrement je Zustandswechsel nach dem normalen Verfahren wie in einer fehlerfreien Betriebsweise erfolgt.

Die nachstehende graphische Darstellung zeigt einen Vergleich der Inkrementalwegmessung im normalen fehlerfreien Betrieb und im Notlaufverfahren.

Wie der Darstellung zu entnehmen ist führt das Notlaufverfahren zu einer Genauigkeit der Inkrementalwegmessung von +/- ein Inkrement.

In einer weiter vorteilhaften Ausgestaltung des Verfahrens werden, wenn zwei fehlerhafte Sensorsignale vorliegen, bei jedem Einlesen eines Dezimaläquivalents drei Inkremente gezählt.

Liegen zwei gleichmäßig fehlerhafte oder zwei ungleichmäßig fehlerhafte Sensorsignale vor, werden je Sequenz von den sechs im fehlerfreien Betrieb vorhandenen Zuständen nur zwei erfasst, da jede Sequenz vier Zustände enthält, die nicht direkt erkannt werden können.

Erfindungsgemäß ist in dieser Fehlersituation vorgesehen bei jedem erfassten Zustandswechsel drei Inkremente in der Inkrementalwegmessung zu zählen.

Auf diese Weise können die nicht erkannten Zustandswechsel in der Zählung der Inkremente berücksichtigt werden.

Die nachfolgende Darstellung zeigt einen graphischen Vergleich zwischen der Inkrementalwegmessung im normalen fehlerfreien Betrieb und im Notlaufverfahren bei zwei gleichmäßig fehlerhaften Sensorsignalen.

Der graphische Vergleich zeigt, dass im Notlaufverfahren eine Genauigkeit der Inkrementalwegmessung von +/- einem Inkrement erreicht wird.

Die dieser Erfindung zugrunde liegende Aufgabe wird auch durch eine Vorrichtung zur Ansteuerung eines Elektromotors enthaltend einen Elektromotor mit einem Rotor und einer Rechner- oder Steuereinheit mit einer Einrichtung zum Erfassen und Abspeicherung sowie Auswertung von elektronischen Sensorsignalmustern zur Bestimmung der Position und Drehrichtung des Rotor sowie Sensormittel zur Erfassung derselben, wobei der Elektromotor von der Rechner- oder Steuereinheit in Abhängigkeit von der Position und der Drehrichtung des Rotors ansteuerbar ist, gelöst.

Zweckmäßigerweise weist der Elektromotor eine Inkrementalwegmessung zur Bestimmung der Position des durch den Elektromotor antreibbaren Stellglieds und eine Einrichtung in der Rechner- oder Steuereinheit zur Korrektur der Zählung der Inkremente in Abhängigkeit des Vorliegens mindestens eines Sensorsignalfehlers auf.

**Patentansprüche**

1. Verfahren zur Ansteuerung eines Elektromotors, insbesondere eines EC-Motors, mit einem Rotor, wobei die Position und die Drehrichtung des Rotors durch elektronische Sensorsignale erfasst werden, wobei die erfassten Sensorsignale über einen Binärcode als ein Dezimaläquivalent mit einem bestimmten Dezimalwert, der jeweils einer bestimmten Position des Rotors zuordenbar ist, eingelesen werden und eine Umdrehung des Rotors durch eine bestimmte Sequenz von Dezimaläquivalenten erfasst wird und die Ansteuerung des Elektromotors in Abhängigkeit von der Position und der Drehrichtung des Rotors erfolgt, wobei in Abhängigkeit des Vorliegens von mindestens einem fehlerhaften Sensorsignals der Elektromotor in einem Notlaufverfahren angesteuert wird, wobei mindestens ein fehlerhaftes Sensorsignal vorliegt, wenn die Sequenz mindestens ein Dezimaläquivalent enthält, das einen vorbestimmten Wert aufweist, der von einem vorbestimmten Erwartungswert abweicht, wobei bei einem Vorliegen von mindestens einem fehlerhaften Sensorsignal der Elektromotor mit einem für das den vorbestimmten Wert aufweisende Dezimaläquivalent gebildeten Ersatzwert angesteuert wird, wobei der Ersatzwert berechnet wird, **dadurch gekennzeichnet, dass** wenn ein fehlerhaftes Sensorsignal vorliegt, der Ersatzwert nach der Formel

$$EW = 7 - X$$

berechnet wird, wobei EW den Ersatzwert und X den Dezimalwert eines korrekt erfassten Dezimaläquivalents aus der Sequenz bezeichnet und die Größe X dem Dezimalwert des Dezimaläquivalents entspricht, das in Zählfolge als Zweitnächstes der erfassten Sequenz nach dem den vorbestimmten Wert aufweisenden Dezimaläquivalent mit dem vorbestimmten Wert eingelesen wird.

2. Verfahren nach Anspruch 1, **dadurch gekennzeichnet, dass** ein fehlerhaftes Sensorsignal vorliegt, wenn die Sequenz aus vier Dezimaläquivalenten besteht und ein Dezimaläquivalent einen vorbestimmten Wert aufweist, der von einem vorbestimmten Erwartungswert abweicht.

14

3. Verfahren nach Anspruch 2, **dadurch gekennzeichnet, dass** die Drehrichtung des Rotors anhand der Reihenfolge der eingelesenen Dezimaläquivalente erkannt wird.

4. Verfahren nach Anspruch 1, **dadurch gekennzeichnet, dass** zwei gleichmäßig fehlerhafte Sensorsignale vorliegen, wenn die Sequenz aus zwei Dezimaläquivalenten besteht und ein Dezimaläquivalent einen vorbestimmten Wert aufweist, der von einem vorbestimmten Erwartungswert abweicht.

5. Verfahren nach Anspruch 4, **dadurch gekennzeichnet, dass** wenn zwei gleichmäßig fehlerhafte Sensorsignale vorliegen, der Ersatzwert nach der Formel

$$EW = 7 - X$$

berechnet wird, wobei EW den Ersatzwert und X den Dezimalwert eines korrekt erfassten Dezimaläquivalents aus der Sequenz bezeichnet und die Größe X dem Dezimalwert des Dezimaläquivalents entspricht, das in der Gegenphase zu dem den vorbestimmten Wert aufweisenden Dezimaläquivalent mit dem vorbestimmten Wert eingelesen wird.

6. Verfahren nach Anspruch 1, **dadurch gekennzeichnet, dass** zwei ungleichmäßig fehlerhafte Sensorsignale vorliegen, wenn die erfasste Sequenz aus zwei korrekt eingelesenen Dezimaläquivalenten besteht und eine Plausibilitätsprüfung einen Fehler ergibt

7. Verfahren nach einem der Ansprüche 1 bis 6, **dadurch gekennzeichnet, dass**, wenn mindestens ein fehlerhaftes Sensorsignal vorliegt, die Ansteuerung des Elektromotors in zumindest einem erfassten Zustand mit veränderbaren Ersatzwerten in Zeitintervallen mit vorbestimmter Zeitdauer erfolgt.

8. Verfahren nach Anspruch 7, **dadurch gekennzeichnet, dass**, wenn ein fehlerhaftes Sensorsignal vorliegt und zwei Zustände mit dem gleichen Dezimalwert erfasst werden, die Ansteuerung des Elektromotors mit veränderbaren Ersatzwerten in zwei Zeitintervallen erfolgt, wobei die besagte Zeitdauer jeweils der Zeitdauer des zuletzt korrekt erfassten Zustands entspricht.

9. Verfahren nach Anspruch 7, **dadurch gekennzeichnet, dass**, wenn zwei fehlerhafte Sensorsignale vorliegen, die Ansteuerung des Elektromotors in jedem erfassten Zustand mit veränderbaren Ersatzwerten in drei Zeitintervallen erfolgt, wobei die Zeitdauer jeweils einem Drittel der Zeitdauer des zuletzt erfassten Zustands entspricht.

10. Verfahren nach Anspruch 9, **dadurch gekennzeichnet, dass**, wenn zwei ungleichmäßig fehlerhafte Sensorsignale vorliegen, der Elektromotor mit einem Ersatzwert angesteuert wird, der in einem gestörten 2-Bit-Zustand der Wertigkeit des nicht gestörten Sensorsignals entspricht und der Ersatzwert in einem gestörten 1-Bit-Zustand der Summe der Wertigkeiten der beiden gestörten Sensorsignale entspricht.

11. Verfahren nach einem der Ansprüche 1 bis 10 **dadurch gekennzeichnet, dass**, in einer Inkrementalwegmessung zur Bestimmung der Position eines durch den Elektromotor antreibbaren Stellglieds, wobei der Wechsel eines jeden Dezimaläquivalents als ein Inkrement gezählt wird, bei einem Vorliegen von mindestens einem fehlerhaften Sensorsignal die Zählung der Inkremente in der Inkrementalwegmessung korrigiert wird.

12. Verfahren nach Anspruch 11, **dadurch gekennzeichnet, dass**, wenn ein fehlerhaftes Sensorsignal vorliegt, bei jedem Wechsel zu und von dem vorbestimmten Wert zwei Inkremente gezählt werden.

13. Verfahren nach Anspruch 11, **dadurch gekennzeichnet, dass**, wenn zwei fehlerhafte Sensorsignale vorliegen, bei jedem Wechsel eines Dezimaläquivalents drei Inkremente gezählt werden.

14. Vorrichtung zur Durchführung des Verfahrens nach einem der Ansprüche 1 bis 13 enthaltend einen Elektromotor mit einem Rotor und eine Rechner- oder Steuereinheit mit einer Einrichtung zum Erfassung und Abspeicherung sowie Auswertung von elektronischen Sensorsignalmustern zur Bestimmung der Position und der Drehrichtung des Rotors sowie Sensormittel zur Erfassung derselben, wobei der Elektromotor von der Rechner- oder Steuereinheit in Abhängigkeit von der Position und Drehrichtung des Rotors ansteuerbar ist und die Rechner- oder Steuereinheit eine Einrichtung zum Erkennen des Vorliegens mindestens eines Sensorsignalfehlers aufweist, wobei der Elektromotor in Abhängigkeit das Vorliegen mindestens eines Sensorsignalfehlers in einem Notlaufverfahren ansteuerbar ist, wobei die Rechner- oder Steuereinheit Mittel aufweist zum Einlesen der erfassten Sensorsignale über einen Binärcode als ein Dezimaläquivalent mit einem bestimmten Dezimalwert, der jeweils einer bestimmten Position des Rotors zuordenbar ist, und wobei die Rechner- oder Steuereinheit Mittel aufweist zum Erzeugen mindestens eines fehlerhaften Sensorsignals, wenn die Sequenz mindestens ein Dezimaläquivalent enthält, das einen vorbestimmten Wert aufweist, der von einem vorbestimmten Erwartungswert abweicht, wobei die Rechner- oder Steuereinheit Mittel aufweist zum Ansteuern des Elektromotors mit einem, für das den vorbestimmten Wert aufweisende Dezimaläquivalent, gebildeten Ersatzwert, bei einem Vorliegen von mindestens einem fehlerhaften Sensorsignal, wobei die Rechner- oder Steuereinheit Mittel aufweist zum Berechnen des Ersatzwertes, **dadurch gekennzeichnet, dass** die Rechner- oder Steuereinheit Mittel aufweist zum Berechnen des Ersatzwertes nach der Formel

$$EW = 7 - X$$

wenn ein fehlerhaftes Sensorsignal vorliegt, wobei EW den Ersatzwert und X den Dezimalwert eines korrekt erfassten Dezimaläquivalents aus der Sequenz bezeichnet und die Größe X dem Dezimalwert des Dezimaläquivalents entspricht, das in Zählfolge als Zweitnächstes der erfassten Sequenz nach dem den vorbestimmten Wert aufweisenden Dezimaläquivalent mit dem vorbestimmten Wert eingelesen wird.

**15.** Vorrichtung nach Anspruch 14, **dadurch gekennzeichnet, dass** der Elektromotor eine Inkrementalwegmessung zur Bestimmung der Position des durch den Elektromotor antreibbaren Stellglieds aufweist und die Rechner- oder Steuereinheit eine Einrichtung zur Korrektur der Zählung der Inkremente in Abhängigkeit des Vorliegens mindestens eines Sensorsignalfehlers enthält.

**Claims**

1. Method for driving an electric motor, in particular an EC motor, comprising a rotor, wherein the position and the direction of rotation of the rotor are acquired by electronic sensor signals, wherein the acquired sensor signals are read in via a binary code as a decimal equivalent having a specific decimal value which is assignable in each case to a specific position of the rotor, and a revolution of the rotor is acquired by a specific sequence of decimal equivalents and the electric motor is driven depending on the position and the direction of rotation of the rotor, wherein depending on the presence of at least one erroneous sensor signal the electric motor is driven in an emergency running method, wherein at least one erroneous sensor signal is present if the sequence contains at least one decimal equivalent having a predetermined value that deviates from a predetermined expected value, wherein when at least one erroneous sensor signal is present, the electric motor is driven with a replacement value formed for the decimal equivalent having the predetermined value, wherein the replacement value is calculated, **characterized in that** if an erroneous sensor signal is present, the replacement value is calculated according to the formula

$$EW = 7 - X$$

wherein EW denotes the replacement value and X denotes the decimal value of a correctly acquired decimal equivalent from the sequence and the variable X corresponds to the decimal value of the decimal equivalent which is read in with the predetermined value in a counting sequence as second-in-line of the acquired sequence following the decimal equivalent having the predetermined value.

2. Method according to Claim 1, **characterized in that** an erroneous sensor signal is present if the sequence consists of four decimal equivalents and one decimal equivalent has a predetermined value that deviates from a predetermined expected value.

3. Method according to Claim 2, **characterized in that** the direction of rotation of the rotor is detected on the basis of the order of the decimal equivalents read in.

4. Method according to Claim 1, **characterized in that** two uniformly erroneous sensor signals are present if the sequence consists of two decimal equivalents and one decimal equivalent has a predetermined value that deviates from a predetermined expected value.

5. Method according to Claim 4, **characterized in that** if two uniformly erroneous sensor signals are present, the replacement value is calculated according to the formula

$$EW = 7 - X$$

wherein EW denotes the replacement value and X denotes the decimal value of a correctly acquired decimal equivalent from the sequence, and the variable X corresponds to the decimal value of the decimal equivalent which is read in with the predetermined value in antiphase with respect to the decimal equivalent having the predetermined value.

6. Method according to Claim 1, **characterized in that** two non-uniformly erroneous sensor signals are present if the acquired sequence consists of two decimal equivalents read in correctly and a plausibility check reveals an error.

7. Method according to any of Claims 1 to 6, **characterized in that** if at least one erroneous sensor signal is present, the electric motor is driven in at least one acquired state with variable replacement values in time intervals having a predetermined time duration.

8. Method according to Claim 7, **characterized in that** if an erroneous sensor signal is present and two states having the same decimal value are acquired, the electric motor is driven with variable replacement values in two time intervals, wherein said time duration respectively corresponds to the time duration of the last correctly acquired state.

9. Method according to Claim 7, **characterized in that** if two erroneous sensor signals are present, the electric motor is driven in each acquired state with variable replacement values in three time intervals, wherein the time duration respectively corresponds to one third of the time duration of the last acquired state.

10. Method according to Claim 9, **characterized in that** if two non-uniformly erroneous sensor signals are present, the electric motor is driven with a replacement value which in a disturbed 2-bit state corresponds to the significance of the non-disturbed sensor signal and the replacement value in a disturbed 1-bit state corresponds to the sum of the significances of the two disturbed sensor signals.

11. Method according to any of Claims 1 to 10, **characterized in that** in an incremental path measurement for determining the position of an actuator that is drivable by the electric motor, wherein the change of each decimal equivalent is counted as an increment, when at least one erroneous sensor signal is present, the counting of the increments is corrected in the incremental path measurement.

12. Method according to Claim 11, **characterized in that** if an erroneous sensor signal is present, two increments are counted upon each change to and from the predetermined value.

13. Method according to Claim 11, **characterized in that** if two erroneous sensor signals are present, three increments are counted upon each change of a decimal equivalent.

14. Apparatus for carrying out the method according to any of Claims 1 to 13 containing an electric motor comprising a rotor and a computer or control unit comprising a device for acquiring and storing and also evaluating electronic sensor signal patterns for determining the position and the direction of rotation of the rotor and also sensor means for acquiring same, wherein the electric motor is drivable by the computer or control unit depending on the position and direction of rotation of the rotor and the computer or control unit has a device for detecting the presence of at least one sensor signal error, wherein the electric motor is drivable in an emergency running method depending on the presence of at least one sensor signal error, wherein the computer or control unit has means for reading in the acquired sensor signals via a binary code as a decimal equivalent having a specific decimal value that is assignable in each case to a specific position of the rotor, and wherein the computer or control unit has means for generating at least one erroneous sensor signal if the sequence contains at least one decimal equivalent having a predetermined value that deviates from a predetermined expected value, wherein the computer or control unit has means for driving the electric motor with a replacement value formed for the decimal equivalent having the predetermined value, when at least one erroneous sensor signal is present, wherein the computer or control unit has means for calculating the replacement value, **characterized in that** the computer or control unit has means for calculating the replacement value according to the formula

$$EW = 7 - X$$

if an erroneous sensor signal is present, wherein EW denotes the replacement value and X denotes the decimal value of a correctly acquired decimal equivalent from the sequence and the variable X corresponds to the decimal value of the decimal equivalent which is read in with the predetermined value in a counting sequence as second-in-line of the acquired sequence following the decimal equivalent having the predetermined value.

15. Apparatus according to Claim 14, **characterized in that** the electric motor has an incremental path measurement for determining the position of the actuator that is drivable by the electric motor, and the computer or control unit contains a device for correcting the counting of the increments depending on the presence of at least one sensor signal error.

**Revendications**

1. Procédé destiné à amorcer un moteur électrique, notamment un moteur de technologie EC, avec un rotor, la position et la direction de rotation du rotor étant détectées par des signaux électroniques de capteur, les signaux de capteur détectés étant lus par l'intermédiaire d'un code binaire en tant qu'un équivalent décimal avec une valeur décimale déterminée, qui est chaque fois associable à une position déterminée du rotor et un tour du moteur étant détecté par une séquence déterminée d'équivalents décimaux et l'amorçage du moteur électrique s'effectuant en fonction de la position et du sens de rotation du rotor, en fonction de la présence d'au moins un signal de capteur erroné, le moteur électrique étant amorcé dans un procédé d'urgence, au moins un signal de capteur erroné étant présent si la séquence contient au moins un équivalent décimal qui présente une valeur prédéfinie qui diverge d'une valeur attendue prédéfinie, en présence d'au moins un signal de capteur erroné, le moteur électrique étant amorcé avec une valeur de remplacement formée pour l'équivalent décimal comportant la valeur prédéfinie, la valeur de remplacement étant calculée, **caractérisé en ce qu'**en présence d'un signal de capteur erroné, la valeur de remplacement est calculée selon la formule

$$EW = 7 - X,$$

EW étant la valeur de remplacement et X étant la valeur décimale d'un équivalent décimal correctement détecté à partir de la séquence et la grandeur X correspondant à la valeur décimale de l'équivalent décimal qui dans le cycle de comptage est lue avec la valeur prédéfinie, en deuxième lieu de la séquence détectée, après l'équivalent décimal présentant la valeur prédéfinie.

2. Procédé selon la revendication 1, **caractérisé en ce qu'**un signal de capteur erroné est présent si la séquence est constituée de quatre équivalents décimaux et un équivalent décimal présente une valeur prédéfinie qui diverge d'une valeur attendue prédéfinie.

3. Procédé selon la revendication 2, **caractérisé en ce que** le sens de rotation du rotor est identifié à l'aide de la succession des équivalents décimaux lus.

4. Procédé selon la revendication 1, **caractérisé en ce que** deux signaux de capteur erronés également sont présents si la séquence est constituée de deux équivalents décimaux et un équivalent décimal présente une valeur prédéfinie qui diverge d'une valeur attendue prédéfinie.

5. Procédé selon la revendication 4, **caractérisé en ce qu'**en présence de deux signaux de capteur erronés également, la valeur de remplacement est calculée selon la formule

$$EW = 7 - X,$$

EW étant la valeur de remplacement et X la valeur décimale d'un équivalent décimal correctement détecté à partir de la séquence et la grandeur X correspondant à la valeur décimale de l'équivalent décimal qui est lue avec la valeur prédéfinie dans la phase opposée de l'équivalent décimal présentant la valeur prédéfinie.

6. Procédé selon la revendication 1, **caractérisé en ce que** deux signaux de capteur erronés inégalement sont présents si la séquence détectée est constituée de deux équivalents décimaux lus correctement et si un contrôle de plausibilité aboutit à une erreur.

7. Procédé selon l'une quelconque des revendications 1 à 6, **caractérisé en ce qu'**en présence d'au moins un signal de capteur erroné, l'amorçage du moteur électrique s'effectue dans au moins un état détecté avec des valeurs de remplacement variables dans des intervalles de temps d'une durée prédéterminée.

8. Procédé selon la revendication 7, **caractérisé en ce qu'**en présence d'un signal de capteur erroné et si deux états avec la même valeur décimale sont détectés, l'amorçage du moteur s'effectue avec des valeurs de remplacement variables en deux intervalles de temps, la durée citée correspondant respectivement à la durée de l'état correctement détecté en dernier lieu.

9. Procédé selon la revendication 7, **caractérisé en ce qu'**en présence de deux signaux de capteur erronés, l'amorçage du moteur électrique s'effectue dans chaque état détecté avec des valeurs de remplacement variables, en trois intervalles de temps, la durée correspondant chaque fois à un tiers de la durée de l'état détecté en dernier lieu.

10. Procédé selon la revendication 9, **caractérisé en ce qu'**en présence de deux signaux de capteur inégalement erronés, le moteur électrique est amorcé avec une valeur de remplacement qui dans un état perturbé de 2 bits, correspond à la valence du signal de capteur non perturbé et la valeur de remplacement dans un état perturbé de 1 bit correspond à la somme des valences des deux signaux de capteur perturbés.

11. Procédé selon l'une quelconque des revendications 1 à 10, **caractérisé en ce que** lors d'une mesure incrémentale de la course pour déterminer la position d'un organe de réglage amorçable par le moteur électrique, le changement de chaque équivalent décimal étant compté comme un incrément, en présence d'au moins un signal de capteur erroné, le comptage des incréments lors de la mesure incrémentale de course est corrigé.

12. Procédé selon la revendication 11, **caractérisé en ce qu'**en présence d'un signal de capteur erroné, à chaque changement vers et à partir de la valeur prédéfinie, deux incréments sont comptés.

13. Procédé selon la revendication 11, **caractérisé en ce qu'**en présence de deux signaux de capteur erronés, à chaque changement d'un équivalent décimal, trois incréments sont comptés.

14. Dispositif destiné à réaliser le procédé selon l'une quelconque des revendications 1 à 13, contenant un moteur électrique avec un rotor et une unité d'ordinateur ou de commande avec un système de détection et de mémorisation, ainsi que d'évaluation des modèles de signaux électroniques pour déterminer la position et le sens de rotation du rotor, ainsi que des moyens capteurs pour détecter ce dernier, le moteur électrique étant amorçable par l'unité d'ordinateur ou de commande en fonction de la position et du sens de rotation du rotor et l'unité d'ordinateur ou de commande comportant un système d'identification de la présence d'au moins une erreur de signal de capteur, en fonction de la présence d'au moins une erreur de signal de capteur, le moteur électrique étant amorçable dans un procédé d'urgence, l'unité d'ordinateur ou de commande comportant des moyens pour la lecture des signaux de capteur détectés par l'intermédiaire d'un code binaire en tant qu'un équivalent décimal, avec une valeur décimale déterminée qui est chaque fois associable à une position déterminée du rotor et l'unité d'ordinateur ou de commande comportant des moyens pour générer au moins un signal de capteur erroné si la séquence contient au moins une valeur décimale qui comporte une valeur prédéfinie qui diverge d'une valeur attendue prédéfinie, l'unité d'ordinateur ou de commande comportant des moyens pour amorcer le moteur électrique avec une valeur de remplacement formée pour l'équivalent décimal présentant la valeur prédéfinie, en présence d'au moins un signal de capteur erroné, l'unité d'ordinateur ou de commande comportant des moyens pour calculer la valeur de remplacement, **caractérisé en ce que** l'unité d'ordinateur ou de commande comporte des moyens pour calculer la valeur de remplacement selon la formule

$$EW = 7 - X,$$

en présence d'un signal de capteur erroné, EW étant la valeur de remplacement et X étant la valeur décimale d'un équivalent décimal correctement détecté à partir de la séquence et la grandeur X correspondant à la valeur décimale de l'équivalent décimal, qui dans le cycle de comptage est lue avec la valeur prédéfinie, en deuxième lieu de la séquence détectée, après l'équivalent décimal présentant la valeur prédéfinie.

15. Dispositif selon la revendication 14, **caractérisé en ce que** le moteur électrique comporte une mesure incrémentale de la course pour déterminer la position de l'organe de réglage amorçable par le moteur électrique et l'unité d'ordinateur ou de commande contenant un système pour la correction du comptage des incréments, en fonction de la présence d'au moins une erreur de signal de capteur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0630097 A2
- EP 0346764 A2
- DE 4036024 C1
- US 4914437 A